# EUROPEAN PATENT SPECIFICATION

(11) **EP 2 295 751 B1**
(45) Date of publication and mention of the grant of the patent: **07.11.2012**
(21) Application number: 09176473.8
(22) Date of filing: 19.11.2009
(51) Int. Cl.: F01N 3/20, F01N 11/00, F02D 41/02

(54) **Exhaust system**
Abgassystem
Système d'échappement

(30) Priority: 31.08.2009 KR 20090081574
(43) Date of publication of application: 16.03.2011
(73) Proprietor: HYUNDAI MOTOR COMPANY, Seoul (KR); KIA Motors Corporation, Seoul (KR)
(72) Inventor: Lee, Jin Ha, Seoul (KR); Park, Jin Woo, Suwon-city (KR); Park, Jun Sung, Yongin-si, Gyeonggi-do (KR)
(74) Representative: Viering, Jentschura & Partner

(56) References cited:
- EP-A1- 1 857 647
- US-A- 6 082 101
- US-B1- 6 755 015

## Description

### BACKGROUND OF THE INVENTION

### Field of the Invention

The present invention relates to an exhaust system. More particularly, the present invention relates to an exhaust system for reducing nitrogen oxide that is included in exhaust gas.

### Description of Related Art

Generally, exhaust gas that is exhausted through an exhaust manifold of an engine is induced to pass through a catalytic converter that is mounted in the middle of an exhaust pipe to be purified, and noise thereof is reduced while passing through a muffler before the exhaust gas is discharged to the outside through a tail pipe.

The catalytic converter processes the pollution materials that are included in the exhaust gas. Further, a particulate filter is mounted on the exhaust pipe to trap particulate material (PM) that is included in the exhaust gas.

A selective catalytic reduction device is a type of catalytic converter. Reducing agents such as carbon monoxide, total hydrocarbon (THC), and so on react well with nitrogen oxide rather than oxygen in the selective catalyst reduction apparatus (SCR), which is why it is called a selective catalyst reduction apparatus (SCR).

In an internal combustion engine to which the selective catalyst reduction apparatus is installed, the fuel is continuously and additionally injected according to the nitrogen oxide amount in the exhaust gas. Accordingly, the hydrocarbon can be slipped from the selective catalyst reduction apparatus, and the fuel consumption is increased.

Also, when the reducing agent is continuously supplied, an oxidation/reduction reaction is also continuously performed in the exhaust pipe. Accordingly, the durability of the catalyst is deteriorated by reaction heat that is formed during the oxidation/reduction reaction.

The information disclosed in this Background of the Invention section is only for enhancement of understanding of the general background of the invention and should not be taken as an acknowledgement or any form of suggestion that this information forms the prior art already known to a person skilled in the art.

Document US 6,082,101 discloses an engine exhaust gas purifier comprising: a catalytic converter for purifying exhaust gas ; and catalyst diagnosis means for discriminating the deterioration of the catalytic converter by comparing the rising characteristic of the exhaust gas purification rate of the catalytic converter relative to the catalyst temperature with a reference rising characteristic.

### BRIEF SUMMARY OF THE INVENTION

Various aspects of the present invention are directed to provide an exhaust system having advantages of improving regeneration efficiency according to the deterioration rate of the catalyst. To this end, the invention provides an exhaust system according to claim 1. Further embodiments are described in the dependent claims.

According to the present invention, if it is determined that the purification rate of the nitrogen oxide purification catalyst is higher than a predetermined value, the fuel injection pattern is varied to effectively manage the deterioration of the catalyst at the next fuel injection.

### BRIEF DESCRIPTION OF THE DRAWINGS

FIG. 1 is a schematic diagram of an exhaust system according to an exemplary embodiment of the present invention.

FIG. 2 is a flowchart of an exhaust system according to an exemplary embodiment of the present invention.

FIG. 3 is a schematic diagram of an exhaust system according to another exemplary embodiment of the present invention.

FIG. 4A and FIG. 4B are control flowcharts of an exhaust system according to another exemplary embodiment of the present invention.

FIG. 5 is a graph showing reducing agent injection amount and temperature difference between the front and rear of the catalyst in an exhaust system according to an exemplary embodiment of the present invention.

FIG. 6 is a graph showing a temperature difference between the front and rear of the catalyst according to travel distance in an exhaust system according to an exemplary embodiment of the present invention.

FIG. 7 is a schematic graph of a fuel injection pattern of an injector in an exhaust system according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION OF THE INVENTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

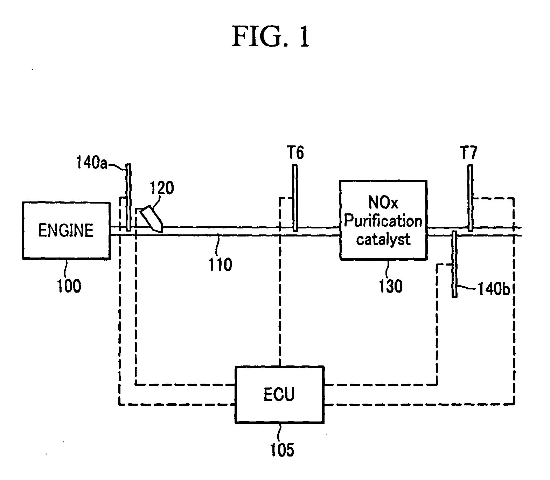

FIG. 1 is a schematic diagram of an exhaust system according to an exemplary embodiment of the present invention.

Referring to FIG. 1, an exhaust system includes an engine 100, an exhaust line 110, an injector 120, a nitrogen oxide purification catalyst 130, a first oxygen sensor 140a, a second oxygen sensor 140b, a first temperature sensor T6, a second temperature sensor T7, and a control portion 105.

The control portion 105 can be operated by at least one of microprocessors that are executed through a predetermined program, and the predetermined program includes a series of orders to perform each step according to an exemplary embodiment of the present invention that is to be mentioned.

The first oxygen sensor 140a, the injector 120, the first temperature sensor T6, the nitrogen oxide purification catalyst 130, the second oxygen sensor 140b, and the second temperature sensor T7 are sequentially disposed on the exhaust line 110.

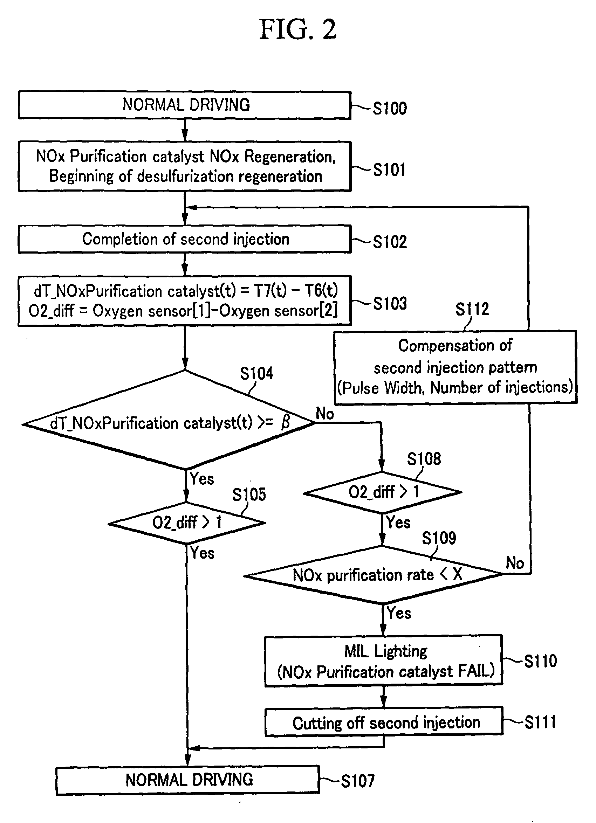

FIG. 2 is a flowchart of an exhaust system according to an exemplary embodiment of the present.

Referring to FIG. 2, the control method of the exhaust system performs a series of control operations that includes a zero step S100, a first step S101, a second step S102, a third step S103, a fourth step S104, a fifth step S105, a seventh step S107, an eighth step S108, a ninth step S109, a tenth step S110, an eleventh step S111, and a twelfth step S112.

In the present invention, a detailed description regarding a sixth step S106 is omitted.

In the zero step S100, the engine 100 is normally operated. The nitrogen oxide regeneration condition or the desulfurization condition is satisfied in the first step S101.

In the second step S102, a reducing agent, that is, gasoline or diesel, is injected through the injector 120. The temperature difference between the front and rear of the nitrogen oxide purification catalyst 130 is detected in the third step S103, and the temperature is detected by the first temperature sensor T6 and the second temperature sensor T7 and the difference is calculated through a control portion (not shown).

If the temperature difference between the front and rear of the nitrogen oxide purification catalyst 130 is higher than a predetermined value in the fourth step S104, it is determined whether the oxygen concentration difference that is detected by the first oxygen sensor 140a and the second oxygen sensor 140b is higher than a predetermined value in the fifth step S105.

If the oxygen concentration difference is higher than a predetermined value in the fifth step S105, it is returned to normal driving in the seventh step S107.

If the temperature difference between the front and rear of the nitrogen oxide purification catalyst 130 is smaller than a predetermined value in the fourth step S104 of an exemplary embodiment of the present invention, it is determined whether the oxygen concentration difference that is detected by the first oxygen sensor 140a and the second oxygen sensor 140b is larger than a predetermined value in the eighth step S108.

If the oxygen concentration difference is larger than a predetermined value, it is determined whether the nitrogen oxide purification rate of the nitrogen oxide purification catalyst 130 is less than a predetermined value in the ninth step S109.

If the nitrogen oxide purification rate is less than a predetermined value, it is concluded that the nitrogen oxide purification catalyst 130 is not operated in the eleventh step S111 to light an emergency lamp, and the injector 120 does not inject the fuel.

If the purification rate of the nitrogen oxide purification catalyst 130 is larger than a predetermined value in the ninth step S109, that is, the nitrogen oxide purification catalyst 130 works to some degree, it is concluded that the nitrogen oxide purification catalyst 130 is deteriorated.

If it is concluded that the nitrogen oxide purification catalyst 130 is deteriorated in the ninth step S109, the injection pattern of the injector 120 is compensated in the twelfth step S112.

In an exemplary embodiment of the present invention, the injection pattern includes the number of injections, injection cycle, pulse width, injection amount, and so on.

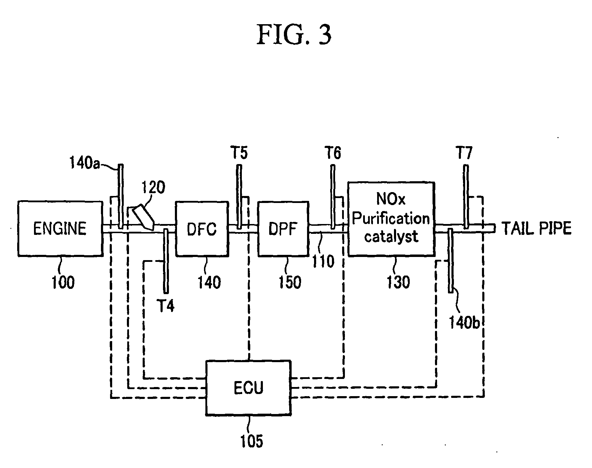

FIG. 3 is a schematic diagram of an exhaust system according to another exemplary embodiment of the present invention.

Referring to FIG. 3, an exhaust system includes an engine 100, an exhaust line 110, a first oxygen sensor 140a, an injector 120, a third temperature sensor T4, a fuel cracking catalyst 140, a fourth temperature sensor T5, a particulate filter 150, a first temperature sensor T6, a nitrogen oxide purification catalyst 130, a second oxygen sensor 140b, and a second temperature sensor T7.

In an exemplary embodiment of the present invention, a detailed description regarding common parts of FIG. 1 and FIG. 3 is omitted.

On the exhaust line 110, the first oxygen sensor 140a, the injector 120, the third temperature sensor T4, the fuel cracking catalyst 140, the fourth temperature sensor T5, the particulate filter 150, the first temperature sensor T6, the nitrogen oxide purification catalyst 130, the second oxygen sensor 140b, and the second temperature sensor T7 are sequentially disposed.

The fuel cracking catalyst can be called a diesel fuel cracking (DFC) catalyst that activates the diesel.

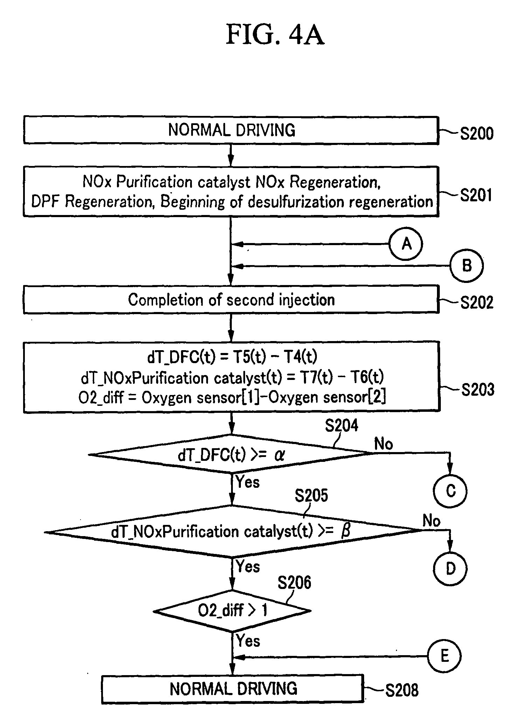

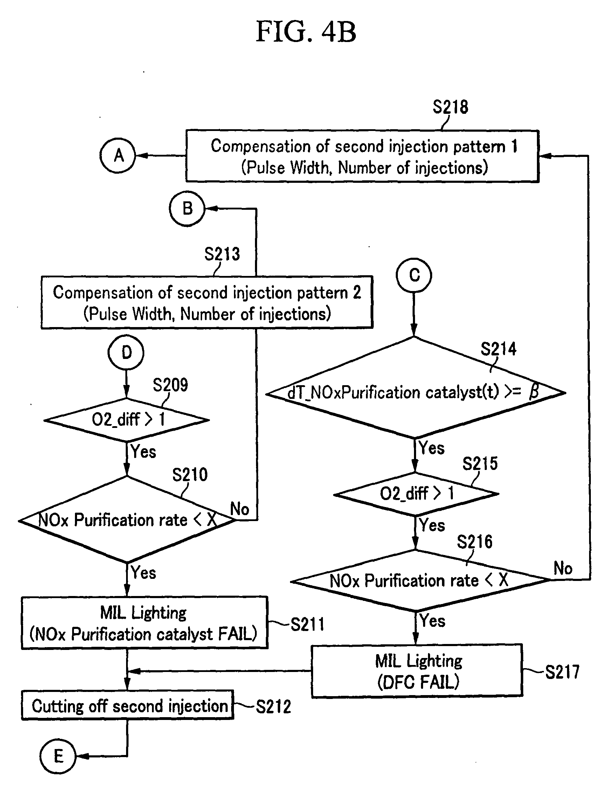

FIG. 4A and FIG. 4B are control flowcharts of an exhaust system according to another exemplary embodiment of the present invention.

Referring to FIG. 4A and FIG. 4B, the control method of the exhaust system performs a series of control steps that includes a zero step S200, a first step S201, a second step S202, a third step S203, a fourth step S204, a fifth step S205, a sixth step S206, an eighth step S208, a ninth step S209, a tenth step S210, an eleventh step S211, a twelfth step S212, a thirteenth step S213, a fourteenth step S214, a fifteenth step S215, a sixteenth step S216, a seventeenth step S217, and an eighteenth step S218.

In the present invention, a detailed description and drawing regarding a seventh step S207 is omitted.

The engine 100 normally operates in the zero step S200, and it is determined whether the regeneration condition or the desulfurization condition of the nitrogen oxide purification catalyst 130 is satisfied in the first step S201.

If the condition thereof is satisfied, the injector 120 injects a reducing agent, that is, fuel, in the second step S202.

If the fuel is injected through the injector 120, the temperature difference between the front side and the rear side of the fuel cracking catalyst 140 and the temperature difference between the front side and the rear side of the nitrogen oxide purification catalyst 130 are detected in the third step S203. Further, the oxygen concentration difference between the first oxygen sensor 140a and the second oxygen sensor 140b is detected in the third step S203.

If the temperature difference between the front side and the rear side of the fuel cracking catalyst 140 is larger than a predetermined value in the fourth step S204, it is determined whether the temperature difference of the front and rear of the nitrogen oxide purification catalyst 130 is larger than a predetermined value in the fifth step S205, and if the temperature difference thereof is larger than the value, it is determined whether the oxygen concentration difference between the first oxygen sensor 140a and the second oxygen sensor 140b is larger than a predetermined value in the sixth step S206.

If the temperature difference between the front and rear of the fuel cracking catalyst 140, the temperature difference between the front and rear of the nitrogen oxide purification catalyst 130, and the oxygen concentration difference between the first oxygen sensor 140a and the second oxygen sensor 140b are larger than a predetermined value in the fourth step S204, the fifth step S205, and the sixth step S206, it is determined that the fuel cracking catalyst 140 and the nitrogen oxide purification catalyst 130 are not deteriorated.

If it is determined that the fuel cracking catalyst 140 and the nitrogen oxide purification catalyst 130 are not deteriorated, the engine 100 is normally operated in the eighth step S208.

If the temperature difference between the front and rear of the fuel cracking catalyst 140 is less than a predetermined value in the fourth step S204, the fourteenth step S214, the fifteenth step S215, and the sixteenth step S216 are executed.

If the temperature difference between the front and rear of the nitrogen oxide purification catalyst 130 is larger than a predetermined value in the fourteenth step S214, and if the oxygen concentration difference between the first oxygen sensor and the second oxygen sensor 140b is larger than a predetermined value in the fifteenth step S215, it is determined whether the nitrogen oxide purification rate of the nitrogen oxide purification catalyst 130 is less than a predetermined value in the sixteenth step S216.

In an exemplary embodiment of the present invention, the method for calculating the purification rate of the nitrogen oxide purification catalyst 130 is well known in the related art, so a detailed description thereof will be omitted.

Therefore, it is determined whether the deteriorated nitrogen oxide purification catalyst 130 works to some degree in the sixteenth step S216.

If the purification rate of the nitrogen oxide purification catalyst 130 is less than a predetermined minimum value in the sixteenth step S216, it is concluded that the fuel cracking catalyst 140 does not work and an emergency lamp is lit in the seventeenth step S217.

Further, if it is determined that the nitrogen oxide purification catalyst 130 has a predetermined purification rate in the sixteenth step S216, the injection pattern of the injector 120 is varied in the eighteenth step S218. The injection pattern includes the number of injections, injection cycle, pulse width, and injection amount in an exemplary embodiment of the present invention.

The ninth step S209, the tenth step S210, the eleventh step S211, and the twelfth step S212 in FIG. 4a and FIG. 4B are respectively the same as the eighth step S108, the ninth step S109, the tenth step S110, and the eleventh step S111 in FIG. 2, so detailed descriptions thereof are omitted.

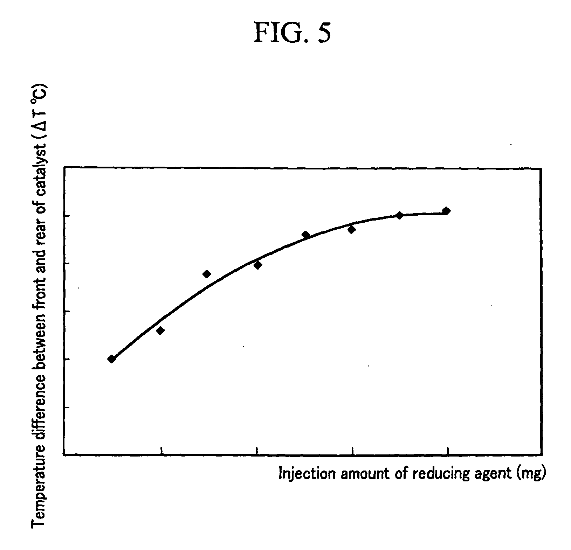

FIG. 5 is a graph showing reducing agent injection amount and temperature difference between the front and rear of the catalyst in an exhaust system according to an exemplary embodiment of the present invention.

Referring to FIG. 5, the greater the amount of the reducing agent, that is, fuel, that is injected by the injector 120, the greater the temperature difference of the front and rear of the nitrogen oxide purification catalyst 130 or the fuel cracking catalyst 140 is. The reason is that the injected fuel is burned to be oxidized by catalyst elements of the nitrogen oxide purification catalyst 130 or the fuel cracking catalyst 140 such that the high temperature exhaust gas is supplied to the rear side thereof.

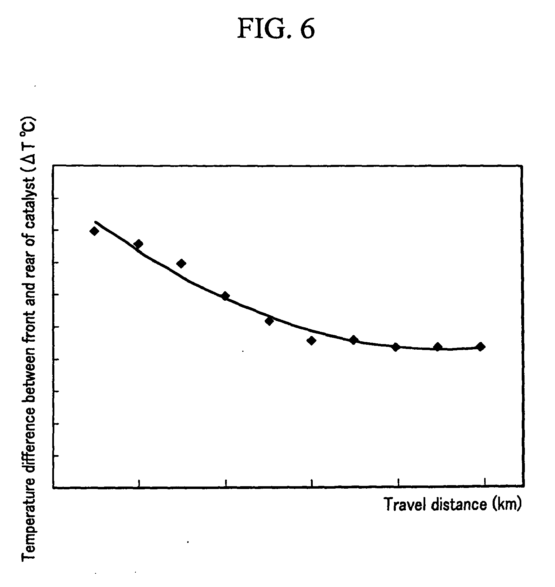

FIG. 6 is a graph showing a temperature difference between the front and the rear of the catalyst according to travel distance in an exhaust system according to an exemplary embodiment of the present invention.

Referring to FIG. 6, the longer the operating time of the engine 100, that is, the travel distance of a vehicle, if predetermined conditions are identical, the smaller the temperature difference of the front and rear of the nitrogen oxide purification catalyst 130 or the fuel cracking catalyst 140 is.

That is, as the travel distance becomes longer, the catalyst components of the nitrogen oxide purification catalyst 130 or the fuel cracking catalyst 140 are deteriorated such that the performance thereof becomes low.

Accordingly, when the fuel is injected through the injector 120 such that the injected fuel passes the catalyst, the oxidation rate thereof is low such that the temperature of the exhaust gas is relatively low compared to the normal catalyst.

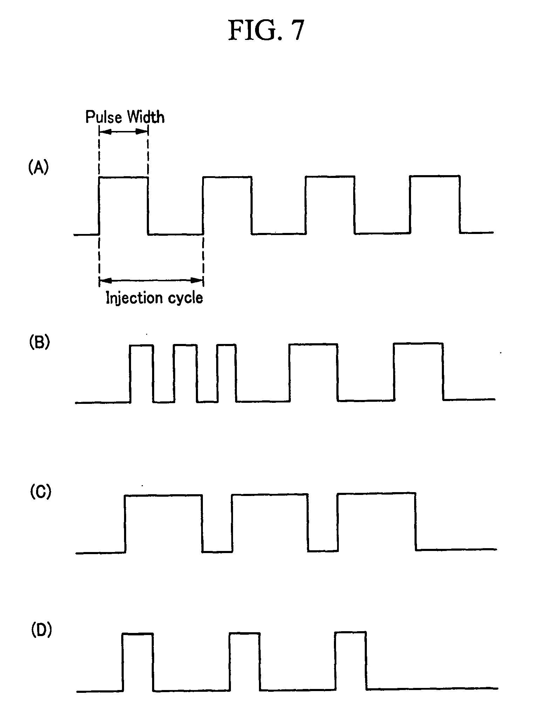

FIG. 7 is a schematic graph of a fuel injection pattern of an injector in an exhaust system according to an exemplary embodiment of the present invention.

Referring to FIG. 7, a plurality of exemplary embodiments of the injection patterns that are injected by the injector 120 are shown.

In (A), the horizontal axis signifies time, and the peak section signifies the injection period during which the fuel is substantially injected by the injector 120. As the injection cycle is shorter, the injection amount is smaller. Further, as the pulse width becomes longer, the injection amount is larger.

As described above, the injection pattern can be varied as shown in (B), (C), and (D) by changing the injection cycle and the pulse width. Further, the entire injection cycle and the entire injection time can be varied.

Referring to FIG. 1 and FIG. 3, the nitrogen oxide purification catalyst 130 traps the nitrogen oxide (NOx) that is included in the exhaust gas of the engine 100, and the reducing agent that is transformed by the fuel cracking catalyst 140 detaches the trapped nitrogen oxide to reduce it.

That is, so as to detach and reduce the nitrogen oxide that is absorbed in the nitrogen oxide purification catalyst 130, the injector 120 that is mounted on the exhaust line 110 injects the fuel, and the fuel cracking catalyst 140 makes reducing agent such as HC, CO, H2, and so on. The nitrogen oxide purification catalyst uses the reducing agent to be regenerated thereby.

As described above, in an exemplary embodiment of the present invention, the fuel that is injected by the injector 120 of the exhaust line is transformed to the reducing agent by the fuel cracking catalyst, and if a predetermined condition is satisfied, the fuel injection pattern of the injector 120 is varied.

## Claims

1. An exhaust system, comprising:
an exhaust line (110) through which exhaust gas passes;
a nitrogen oxide purification catalyst (130) that is mounted on the exhaust line (110) to reduce nitrogen oxide of the exhaust gas;
an injector (120) that is mounted at an upstream side of the nitrogen oxide purification catalyst (130) to additionally inject fuel such that nitrogen oxide that is trapped in the nitrogen oxide purification catalyst (130) is detached to be reduced thereby; and
a control portion (105) that varies an injection pattern of the injector (120)
in a case that, after the fuel is additionally injected by the injector (120), a temperature difference between the front side and the rear side of the nitrogen oxide purification catalyst (130) is lower than a second predetermined value (β) and an oxygen concentration difference between the front side and the rear side of the nitrogen oxide purification catalyst (130) is higher than a third predetermined value (1) and
if it is determined that a purification rate of the nitrogen oxide purification catalyst (130) is higher than a first predetermined value (X), that is, the nitrogen oxide purification catalyst (130) works to some degree, in which case deterioration of the nitrogen oxide purification catalyst (130) is concluded,
wherein after it is determined that the nitrogen oxide purification catalyst (130) is deteriorated, the control portion (105) varies the injection pattern of the injector (120) at the next injection.

2. The exhaust system of claim 1, wherein
a fuel cracking catalyst (140) is mounted at the exhaust line (110) between the injector (120) and the nitrogen oxide purification catalyst (130) to transform the fuel that is additionally injected through the injector (120) to a reducing agent and to raise temperature of a rear side thereof, and
the reducing agent that is formed by the fuel cracking catalyst (140) detaches the nitrogen oxide that is trapped in the nitrogen oxide purification catalyst (130) and reduces the detached nitrogen oxide.

3. The exhaust system of claim 1, wherein the injection pattern includes injection amount of the fuel, injection cycle, injection time, and pulse width.

4. The exhaust system of claim 1, wherein the injector includes:
a first injector that injects fuel into air for combustion in an engine or into a cylinder thereof; or
a second injector (120) that is disposed at the exhaust line (110) to inject fuel.

## Patentansprüche

1. Ein Abgassystem, aufweisend:
eine Abgasleitung (110), durch welche Abgas strömt;
einen Stickoxid-Reinigungskatalysator (130), welcher an der Abgasleitung (110) montiert ist, um Stickoxid von dem Abgas zu reduzieren;
einen Injektor (120), der an einer stromaufwärtigen Seite von dem Stickoxid-Reinigungskatalysator (130) montiert ist, um zusätzlich Kraftstoff einzuspritzen, sodass Stickoxid, welches in dem Stickoxid-Reinigungskatalysator (130) gefangen ist, abgegeben wird, um dadurch reduziert zu werden; und
einen Steuerabschnitt (105), welcher ein Injektionsmuster von dem Injektor (120) variiert
in einem Fall, in dem nach einem zusätzlichen Einspritzen des Kraftstoffes durch den Injektor (120) eine Temperaturdifferenz zwischen der vorderen Seite und der hinteren Seite von dem Stickoxid-Reinigungskatalysator (130) niedriger ist als ein zweiter vorbestimmter Wert (β) und eine Sauerstoffkonzentrationsdifferenz zwischen der vorderen Seite und der hinteren Seite von dem Stickoxid-Reinigungskatalysator (130) größer ist als ein dritter vorbestimmter Wert (1), und
wenn ermittelt/bestimmt wird, dass eine Reinigungsrate oder -quote von dem Stickoxid-Reinigungskatalysator (130) größer ist als ein erster vorbestimmter Wert (X), das heißt, der Stickoxid-Reinigungskatalysator (130) in einem gewissen Grad bzw. Maße arbeitet, in welchem Fall eine Verschlechterung des Stickoxid-Reinigungskatalysators (130) gefolgert wird,
wobei nach der Ermittlung/Bestimmung, dass der Stickoxid-Reinigungskatalysator (130) verschlechtert ist, der Steuerabschnitt (105) das Injektionsmuster von dem Injektor (120) bei der nächsten Injektion variiert.

2. Das Abgassystem nach Anspruch 1, wobei ein Kraftstoff-Crack-Katalysator (140) an der Abgasleitung (110) zwischen dem Injektor (120) und dem Stickoxid-Reinigungskatalysator (130) montiert ist, um den Kraftstoff, welcher durch den Injektor (120) zusätzlich eingespritzt wird, zu einem Reduktionsmittel umzuwandeln und um die Temperatur von einer hinteren Seite davon zu erhöhen, und
das Reduktionsmittel, das durch den Kraftstoff-Crack-Katalysator (140) gebildet wird, das Stickoxid, welches in dem Stickoxid-Reinigungskatalysator (130) gefangen ist, abtrennt bzw. freigibt und das freigegebene Stickoxid reduziert.

3. Das Abgassystem nach Anspruch 1, wobei das Injektionsmuster umfasst eine Injektionsmenge des Kraftstoffes, einen Injektionszyklus, eine Injektionszeit und eine Pulsdauer bzw. Pulsbreite.

4. Das Abgassystem nach Anspruch 1, wobei der Injektor aufweist:
einen ersten Injektor, welcher Kraftstoff in Luft einspritzt zur Verbrennung in einem Motor oder in einen Zylinder davon, oder
einen zweiten Injektor (120), welcher an der Abgasleitung (110) angeordnet ist, um Kraftstoff einzuspritzen.

## Revendications

1. Système d'échappement comprenant :
une conduite d'échappement (110) à travers laquelle passe le gaz d'échappement ;
un catalyseur de purification d'oxyde d'azote (130) qui est monté sur la conduite d'échappement (110) pour réduire l'oxyde d'azote du gaz d'échappement ;
un injecteur (120) qui est monté sur le côté amont du catalyseur de purification d'oxyde d'azote (130) pour additionnellement injecter du carburant de manière à ce que l'oxyde d'azote qui est piégé dans le catalyseur de purification d'oxyde d'azote (130) soit libéré pour être ainsi réduit ; et
une partie de régulation (105) qui modifie les paramètres d'injection de l'injecteur (120)
dans un cas où, après que le carburant est additionnellement injecté par l'injecteur (120), une différence de température entre l'avant et l'arrière du catalyseur de purification d'oxyde d'azote (130) est inférieure à une deuxième valeur prédéterminée (β) et une différence de concentration d'oxygène entre l'avant et l'arrière du catalyseur de purification d'oxyde d'azote (130) est supérieure à une troisième valeur prédéterminée (1) et
s'il est déterminé qu'un taux de purification du catalyseur de purification d'oxyde d'azote (130) est supérieur à une première valeur prédéterminée (X), à savoir, que le catalyseur de purification d'oxyde d'azote (130) fonctionne dans une certaine mesure, on conclut dans ce cas à la détérioration du catalyseur de purification d'oxyde d'azote (130),
où, après qu'il est déterminé que le catalyseur de purification d'oxyde d'azote (130) est détérioré, la partie de régulation (105) modifie les paramètres d'injection de l'injecteur (120) lors de l'injection suivante.

2. Système d'échappement selon la revendication 1, dans lequel
un catalyseur de craquage du carburant (140) est monté au niveau de la conduite d'échappement (110) entre l'injecteur (120) et le catalyseur de purification d'oxyde d'azote (130) pour transformer le carburant qui est additionnellement injecté par l'injecteur (120) en un agent réducteur et pour élever sa température à l'arrière, et
l'agent réducteur qui est formé par le catalyseur de craquage du carburant (140) entraîne la libération de l'oxyde d'azote qui est piégé dans le catalyseur de purification d'oxyde d'azote (130) et la réduction de l'oxyde d'azote libéré.

3. Système d'échappement selon la revendication 1, dans lequel les paramètres d'injection comprennent la quantité d'injection de carburant, le cycle d'injection, la durée d'injection et la largeur d'impulsion.

4. Système d'échappement selon la revendication 1, dans lequel l'injecteur comprend :
un premier injecteur qui injecte du carburant dans l'air en vue de la combustion dans un moteur ou dans un cylindre de celui-ci ; ou
un deuxième injecteur (120) qui est disposé au niveau de la conduite d'échappement (110) pour injecter le carburant.
